# FASCICULE DE BREVET EUROPEEN

(11) **EP 2 129 946 B1**
(45) Date de publication et mention de la délivrance du brevet: **04.05.2011**
(21) Numéro de dépôt: 08799916.5
(22) Date de dépôt: 28.03.2008
(51) Int. Cl.: F16K 5/06, F16K 27/00

(54) **ROBINET MONOBLOC**
EINHEITLICHER KUGELFÖRMIGER HAHN MIT VERSCHLUSSSTOPFEN
UNITARY SPHERICAL TAP CONTAINING A STOPPER

(30) Priorité: 30.03.2007 FR 0754182
(43) Date de publication de la demande: 09.12.2009
(73) Titulaire: Safi, 26770 Taulignan (FR)
(72) Inventeur: MOISON, Dominique, F-26770 St Pantaleon Les Vignes (FR); MAILHAN, Thierry, F-84600 Valreas (FR)
(74) Mandataire: Thibault, Jean-Marc
(86) Numéro de dépôt international: PCT/FR2008/050550
(87) Numéro de publication internationale: WO 2008/129223

(56) Documents cités:
- WO-A-96/12131
- DE-A1- 19 945 960
- GB-A- 892 599
- GB-A- 2 231 640
- US-A- 4 467 823
- US-A- 4 523 608

## Description

La présente invention concerne le domaine technique des robinets ou des vannes au sens général et elle vise plus précisément les robinets comportant dans un corps, un obturateur à portée sphérique commandé en rotation pour fermer ou ouvrir un passage pour un fluide.

Selon un exemple préféré d'application, l'objet de l'invention concerne un robinet destiné à être fixé sur une cuve et dont l'obturateur à portée sphérique est une palette. Les robinets à palette sont bien connus dans l'état de la technique et peuvent être réalisés en différents matériaux et selon divers procédés qui globalement font toujours intervenir la même structure.

Un robinet à palette comprend un boîtier principal délimitant une chambre communiquant avec des tubulures amont et aval assurant le raccordement avec des canalisations ou analogues. Ce boîtier principal est généralement ouvert pour donner accès à la chambre qui est fermée par un chapeau ou analogue assurant le centrage d'un arbre cylindrique s'étendant extérieurement au chapeau pour être calé en rotation avec une manette de manoeuvre. L'arbre cylindrique est prolongé intérieurement à la chambre, à une palette décalée ou décentrée qui est destinée à coopérer avec un siège ou une garniture d'étanchéité montée dans la chambre préalablement à la fermeture du boîtier par le chapeau.

Par exemple, la demande de brevet WO 96/121131 décrit un robinet comportant dans un corps principal, un alésage de réception pour un obturateur destiné à coopérer avec un siège maintenu en position entre une bague insérée dans une rainure aménagée dans le corps, et une tubulure d'extrémité fixée sur le corps principal.

Un tel robinet permet d'assurer une fonction d'ouverture ou de fermeture en particulier d'une cuve sur laquelle le robinet est implanté. Dans certaines applications, une telle cuve équipée d'un tel robinet est placée à l'intérieur d'un conteneur destiné à être complètement fermé lors du transport. Or le robinet qui s'étend en saillie par rapport à la cuve impose d'utiliser un conteneur de dimensions supérieures à celles de la cuve pour tenir compte de la longueur du robinet. Il s'ensuit que le volume de produit transporté dans la cuve est inférieur au volume du conteneur, ce qui représente une perte ou un surcoût de transport. Pour limiter l'impact de cet inconvénient, les dimensions entre la cuve et le conteneur sont choisies au plus juste, ce qui conduit fréquemment à une détérioration du robinet lors de la fermeture du conteneur.

Il est également connu dans le domaine des robinets à obturateur sphérique, par le document GB 892 599, un robinet comportant un corps dans lequel sont aménagés deux alésages délimitant entre eux un épaulement d'appui pour un siège rapporté sur lequel est apte à coopérer un obturateur sphérique commandé en rotation par une manette pour obturer de manière étanche ou ouvrir en partie les alésages. Il s'avère que le montage d'un tel siège ne permet pas de garantir une bonne étanchéité de fermeture.

De même, le document GB 2 231 640 décrit un robinet avec un obturateur sphérique maintenu en appui sur un siège d'étanchéité à l'aide d'un système à ressort. Ce robinet qui ne permet pas de garantir une bonne étanchéité de fermeture présente une complexité de mise en oeuvre.

Par ailleurs, il est connu aussi par le document DE 199 45 960 une vanne présentant un corps surmoulé sur un obturateur coopérant avec son siège.

La présente invention vise donc à remédier aux inconvénients énoncés ci-dessus en proposant un nouveau robinet à obturateur à portée sphérique conçu pour pouvoir présenter une longueur limitée tout en offrant une bonne étanchéité et la possibilité de pouvoir être raccordé en amont et en aval.

Un autre objet de l'invention est de réaliser un robinet qui présente l'avantage de pouvoir être fabriqué par moulage, en une matière plastique appropriée, permettant d'envisager une fabrication en grande série et à bas coût.

Pour atteindre un tel objectif, l'objet de l'invention concerne un robinet comportant un corps monobloc présentant une première tubulure et une deuxième tubulure délimitant des alésages avec un alésage présentant une section droite transversale supérieure à l'autre alésage, en se raccordant entre eux pour délimiter un épaulement d'appui pour un siège rapporté sur lequel est apte à coopérer un obturateur à portée sphérique commandé en rotation par une manette pour obturer de manière étanche ou ouvrir au moins en partie les alésages, le siège possédant des dimensions adaptées pour être introduit par la tubulure jusqu'à l'épaulement pour y être retenu par des moyens de maintien.

Selon l'invention, le siège est maintenu en appui sur l'épaulement à l'aide de moyens du type à encliquetage.

Avantageusement, le siège est réalisé en un matériau déformable assurant son montage par encliquetage dans l'alésage.

Selon cette variante de réalisation, les moyens de maintien du type à encliquetage sont réalisés par des ergots répartis angulairement en étant aménagés dans l'alésage de la tubulure, de manière à délimiter avec l'épaulement une gorge de réception du siège.

De préférence, le siège d'étanchéité délimite une collerette périphérique annulaire apte à pouvoir par déformation passer au-delà des ergots pour s'engager dans la gorge.

Selon une autre variante de réalisation, le siège d'étanchéité est pourvu d'ergots aptes à s'engager dans des logements aménagés dans l'alésage.

Avantageusement, le siège est en appui sur un joint d'étanchéité monté à l'intérieur d'une gorge annulaire aménagée dans l'épaulement.

Il est à noter que l'obturateur à portée sphérique est un obturateur à palette.

De préférence, l'obturateur à palette est réalisé en polycarbonate.

Selon une autre caractéristique de l'objet de l'invention, l'une des tubulures est équipée de moyens de raccordement à une cuve tandis que l'autre tubulure est équipée de moyens de raccordement à une conduite et à un bouchon de fermeture.

De préférence, le corps monobloc est réalisé par moulage en une matière plastique

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue en perspective montrant un exemple de réalisation d'un robinet conforme à l'invention.
La **Figure 2** est une vue en coupe élévation du robinet conforme à l'invention en position fermée.
La **Figure 3** est une vue en coupe prise sensiblement selon les lignes X-X' de la **Fig. 2****.**
La **Figure 4** est une vue du robinet analogue à la **Fig. 3****,** mais illustrée avec l'obturateur en position d'ouverture.
Les **Figures 5** et **6** sont des vues en coupe élévation montrant deux phases caractéristiques de montage du siège dans le corps de robinet.
La **Figure 7** est une vue transversale prise sensiblement selon les lignes B-B de la **Fig. 6****.**

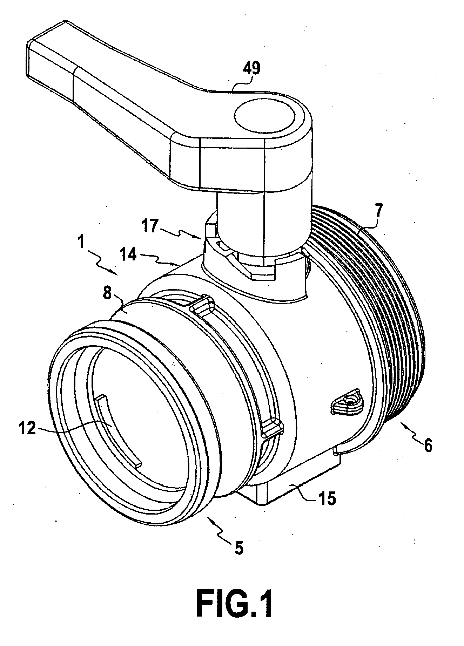

Tel que cela ressort plus précisément des **Fig. 1** à **7****,** l'objet de l'invention concerne un robinet **1** comportant un obturateur à portée sphérique **2** réalisé par une palette. Le robinet **1** comporte un boîtier ou un corps **3** réalisé avantageusement en une seule pièce ou de manière monobloc. Le corps **3** est réalisé en une matière plastique appropriée par moulage. La matière choisie peut par exemple être le polypropylène.

Le corps **3** est formé pour présenter une première tubulure **5** et une deuxième tubulure **6** dite d'entrée et de sortie ou amont et aval par considération d'un sens de circulation d'un fluide quelconque à l'intérieur d'un circuit dans lequel le robinet est implanté. Les tubulures **5** et **6** présentent chacune des formes générales cylindriques en étant alignées l'une à l'autre. L'une des tubulures par exemple **6** est équipée de moyens **7** de raccordement à une cuve non représentée tandis que l'autre tubulure **5** est équipée de moyens de raccordement **8** à une conduite ou analogue. Par exemple, les moyens de raccordement **7** sont réalisés par un filetage aménagé extérieurement sur un collet **11,** à partir de l'extrémité libre de la deuxième tubulure **6.** La première tubulure **5** est équipée en tant que moyens de raccordement **8,** d'une gorge annulaire d'assemblage aménagée sur sa surface périphérique pour un raccord rapide.

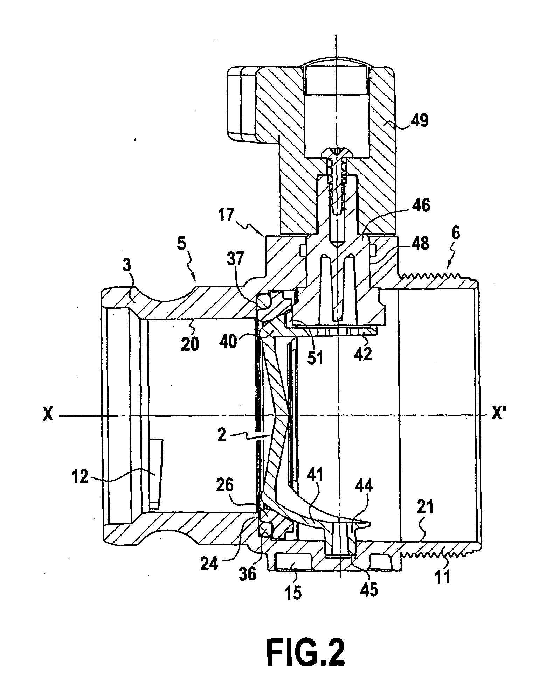

Selon une caractéristique préférée de réalisation, cette première tubulure **5** comporte également des moyens **12** de montage pour un bouchon de fermeture. Tel que cela ressort plus précisément des **Fig. 1** et **2****,** la tubulure **5** comporte intérieurement des moyens de montage 12 du type à baïonnette pour recevoir un bouchon de fermeture interne.

La deuxième tubulure **6** se trouve raccordée à la première tubulure **5** par une partie centrale de raccordement **14** prolongeant le collet **11.** Cette partie centrale de raccordement **14** présente un fond plat **15,** situé à l'opposé d'un rebord saillant annulaire **17.**

La première tubulure **5** délimite intérieurement un alésage **20** de section droite transversale circulaire débouchant dans un alésage **21** délimité par l'intérieur de la deuxième tubulure **6.** Les alésages **20** et **21** sont alignés pour s'étendre selon un axe commun longitudinal **X,X'.** L'alésage **21** présente une section droite transversale supérieure à la section droite transversale de l'alésage **20** de la première tubulure **2.** Les alésages **20** et **21** des tubulures **5** et **6** se raccordent entre elles pour délimiter un épaulement d'appui **24** pour un siège **26** d'étanchéité sur lequel est apte à coopérer l'obturateur **2.** L'épaulement d'appui **24** présente ainsi une surface transversale par rapport au sens d'écoulement du fluide s'effectuant selon la direction **X-X'.**

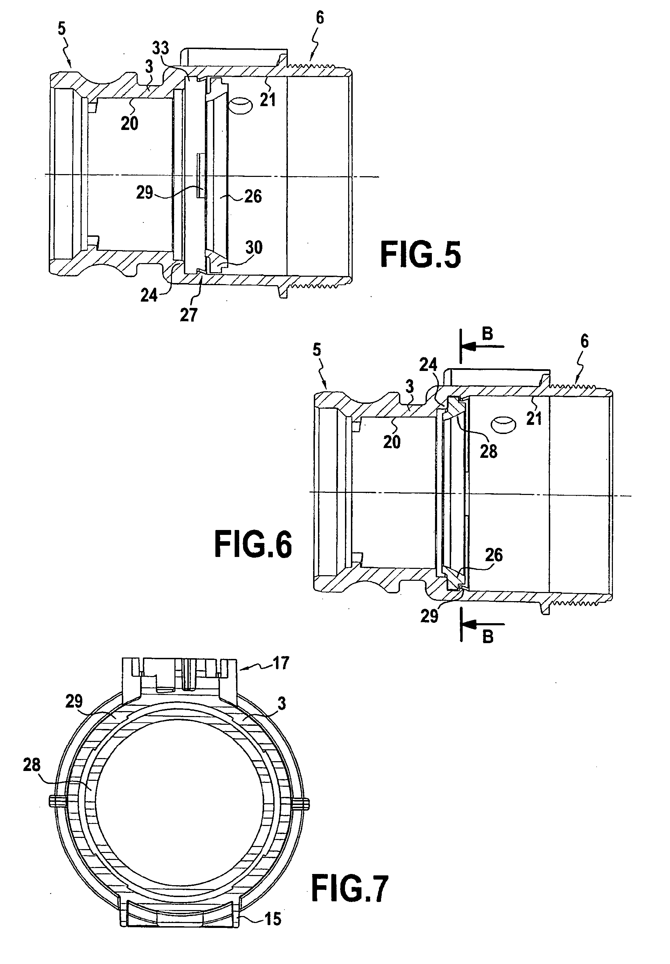

Selon une autre caractéristique de l'objet de l'invention, le siège **26** possède des dimensions adaptées pour être introduit à partir de la deuxième tubulure **6** jusqu'à l'épaulement **24** pour y être retenue par des moyens de maintien **27.** Tel que cela ressort plus précisément des **Fig. 5** et **6****,** les dimensions du siège **26** sont donc inférieures ou égales au jeu près, aux dimensions de l'alésage **21** de manière à permettre l'introduction du siège et son déplacement jusqu'à l'épaulement **24.** Selon l'exemple illustré, le siège **26** se présente sous la forme d'une bague comportant au niveau de son diamètre interne une portée sphérique **28** de forme, par exemple, convexe adaptée pour coopérer avec l'obturateur **2** pour assurer la fermeture étanche du robinet. Bien entendu, la portée sphérique **28** peut présenter une forme différente par exemple concave.

Comme illustré aux **Fig. 1** à **7**, les moyens de maintien **27** sont des moyens de maintien du type à encliquetage. Il doit être considéré que le siège **26** est réalisé en un matériau déformable assurant son montage par encliquetage, dans l'alésage **21.** Ces moyens de maintien du type à encliquetage sont réalisés par des doigts ou des ergots **29** aménagés dans l'alésage **21** en étant répartis angulairement. Par exemple, l'alésage **21** de la deuxième tubulure **6** possède quatre ergots **29** décalés deux à deux de 90°. Le siège **26** délimite une collerette périphérique annulaire **30** apte à pouvoir par déformation passer au-delà des doigts ou des ergots **29** pour s'engager dans une gorge **33** délimitée entre l'épaulement **24** et les ergots. Le siège **26** se trouve ainsi maintenu entre l'épaulement **24** et les ergots **29.** Le siège d'étanchéité **26** est réalisé en un matériau permettant sa déformation autorisant ainsi son montage par encliquetage. De préférence, le siège **26** est réalisé en polycarbonate. Bien entendu, il pourrait être envisagé de réaliser de manière différente les moyens de maintien du type à encliquetage. Par exemple, il pourrait être envisagé de munir le siège d'étanchéité **26** d'ergots aptes à s'engager dans des logements aménagés dans l'alésage **21.**

Selon une variante préférée de réalisation illustrée à la **Fig. 2****,** le siège **26** est en appui sur un joint d'étanchéité **36** monté à l'intérieur d'une gorge annulaire **37** aménagée dans l'épaulement **24.** Ce joint d'étanchéité **36** permet d'assurer l'étanchéité entre le corps **3** et le siège **26.** Il est à noter que la présence du joint d'étanchéité **36** réalisé en un matériau déformable favorise le blocage dans la direction **X-X',** du siège **26** maintenu d'un côté en contact direct avec les ergots **29** et de l'autre côté, en contact indirect avec l'épaulement **24** par l'intermédiaire du joint d'étanchéité **36.**

Selon une autre caractéristique de l'objet de l'invention, l'obturateur **2** est monté à l'intérieur du robinet en étant introduit par la deuxième tubulure **6.** L'obturateur **2** présente ainsi des dimensions inférieures aux dimensions de l'alésage **21.** Dans l'exemple de réalisation d'un obturateur à palette, l'obturateur présente une conformation sensiblement en U comportant une âme **40** prolongée latéralement par deux branches sensiblement parallèles **41** et **42.** La branche **41** est pourvue d'un pivot **44** apte à s'insérer dans un palier **45** réalisé par un dégagement aménagé dans le fond **15** du robinet. La branche **42** est destinée à être reliée à un arbre de rotation **46** guidé en rotation dans un alésage **48** aménagé dans le rebord saillant **17** selon un axe perpendiculaire à l'axe **X, X'** longitudinal du robinet en débouchant à l'extérieur du corps **3** et à l'intérieur de l'alésage **21.** L'arbre de rotation **46** est monté de manière étanche dans le corps **3** et s'étend en saillie en dehors du rebord **17** pour être calé en rotation par tous moyens appropriés avec une manette de manoeuvre **49.**

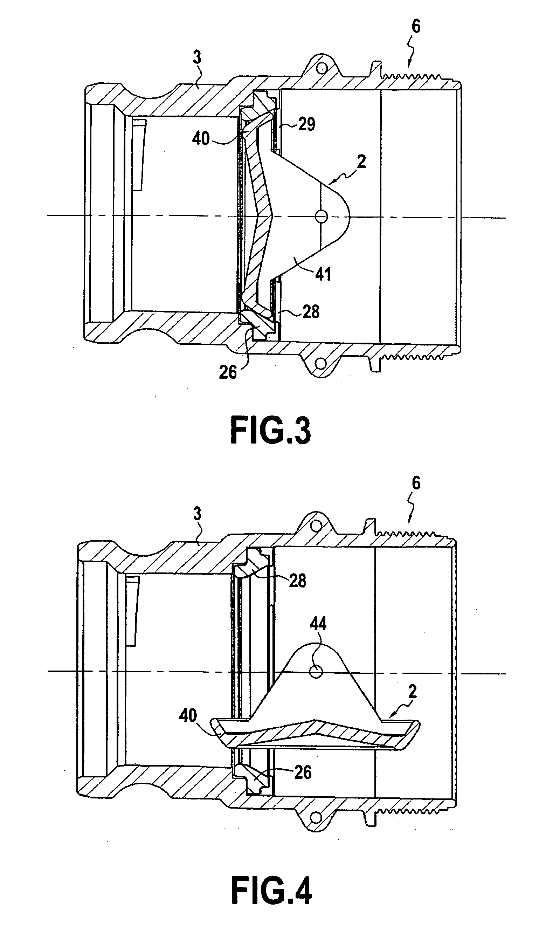

L'âme **40** constituant la palette de l'obturateur se trouve ainsi décalée par rapport à son axe de rotation centré dans le corps du robinet. L'âme **40** présente par sa face extérieure une conformation en portion de cylindre adaptée pour coopérer en position de fermeture de robinet, avec la portée **28** du siège **26 (****Fig. 2** et **Fig. 3****).** La rotation de la manette **49** d'un quart de tour conduit au dégagement de la palette **40** venant s'établir dans un plan sensiblement parallèle à l'axe **X,X' (****Fig. 4****).** Dans cette position, le robinet **1** est ouvert.

De préférence, la branche supérieure **42** de la palette est pourvue d'un logement **51** débouchant adapté pour permettre l'introduction de l'extrémité de l'arbre **46** dans le logement. L'obturateur **2** est ensuite tourné d'un demi-tour de manière à assurer le blocage en rotation de la branche supérieure **42** avec l'arbre **46** en vue d'obtenir la liaison entre l'obturateur **2** et la manette **49.**

Il ressort de la description qui précède que l'objet de l'invention permet de limiter le nombre de pièces du robinet en réalisant un corps **3** monobloc ou en une seule pièce. Le montage du siège **26** à l'intérieur du robinet ne nécessite pas de pièce supplémentaire. Une telle disposition permet d'obtenir un robinet compact présentant une longueur limitée.

L'invention n'est pas limitée aux exemples décrits et représentés car diverses modifications peuvent y être apportées sans sortir de son cadre.

## Revendications

1. - Robinet comportant un corps monobloc **(3)** présentant une première tubulure **(5)** et une deuxième tubulure **(6)** délimitant des alésages **(20, 21)** avec un alésage **(21)** présentant une section droite transversale supérieure à l'autre alésage **(20),** en se raccordant entre eux pour délimiter un épaulement d'appui **(24)** pour un siège **(26)** rapporté sur lequel est apte à coopérer un obturateur à portée sphérique **(2)** commandé en rotation par une manette **(49)** pour obturer de manière étanche ou ouvrir au moins en partie les alésages, le siège **(26)** possédant des dimensions adaptées pour être introduit par la deuxieme tubulure **(6)** jusqu'à l'épaulement **(24)** pour y être retenu par des moyens de maintien **(27), caractérisé en ce que** le siège **(26)** est maintenu en appui sur l'épaulement **(24)** à l'aide de moyens du type à encliquetage **(29)** et le siège (26) est réalisé en un matériau déformable assurant son montage par encliquetage dans l'alésage **(21).**

2. - Robinet selon la revendication 1, **caractérisé en ce que** les moyens de maintien du type à encliquetage **(29)** sont réalisés par des ergots répartis angulairement en étant aménagés dans l'alésage **(21)** de la tubulure **(6),** de manière à délimiter avec l'épaulement **(24)** une gorge **(33)** de réception du siège **(26).**

3. - Robinet selon la revendication 2, **caractérisé en ce que** le siège d'étanchéité délimite une collerette périphérique annulaire **(30)** apte à pouvoir par déformation passer au-delà des ergots **(29)** pour s'engager dans la gorge **(33).**

4. **-** Robinet selon la revendications **1**, **caractérisé en ce que** le siège d'étanchéité **(26)** est pourvu d'ergots aptes à s'engager dans des logements aménagés dans l'alésage **(21).**

5. - Robinet selon la revendication 1, **caractérisé en ce que** le siège **(26)** est en appui sur un joint d'étanchéité **(36)** monté à l'intérieur d'une gorge annulaire **(37)** aménagée dans l'épaulement **(24).**

6. **-** Robinet selon la revendication 1, **caractérisé en ce que** l'obturateur à portée sphérique **(2)** est un obturateur à palette.

7. **-** Robinet selon la revendication **6**, **caractérisé en ce que** l'obturateur à palette **(2)** est réalisé en un matériau polycarbonate.

8. **-** Robinet selon la revendication 1, **caractérisé en ce que** l'une des tubulures **(6)** est équipée de moyens de raccordement **(7)** à une cuve tandis que l'autre tubulure **(5)** est équipée de moyens de raccordement **(8, 12)** à une conduite et à un bouchon de fermeture.

9. **-** Robinet selon la revendication 1, **caractérisé en ce que** le corps monobloc **(3)** est réalisé par moulage en une matière plastique.

## Claims

1. A valve including an integrally formed body (3) having a first coupling segment (5) and a second coupling segment (6) defining bores (20, 21), one of which bores (21) has a right cross-section that is larger than the right cross-section of the other bore (20), and the bores being interconnected to define an abutment shoulder (24) for a separately mounted seat (26) against which a valve member (2) having a spherical bearing surface is suitable for co-operating, which valve member is caused to pivot by a lever (49) to close off the bores in leaktight manner or to open them at least in part, the seat (26) having dimensions adapted to it being inserted via the second coupling segment (6) to the shoulder (24) so as then to be held thereagainst by holding means (27), said valve being **characterized in that** the seat (26) is held in abutment against the shoulder (24) by means of the snap-fastening type (29) and the seat (26) is made of a deformable material enabling it to be mounted in the bore (21) by snap-fastening.

2. A valve according to claim 1, **characterized in that** the holding means of the snap-fastening type (29) are implemented by lugs that are spaced apart angularly while being provided in the bore (21) of the coupling segment (6), so as to define, with the shoulder (24), a groove (33) for receiving the seat (26).

3. A valve according to claim 2, **characterized in that** the sealing seat defines an annular peripheral band (30) suitable for deforming to pass over the lugs (29) so as then to engage in the groove (33).

4. A valve according to claim 1, **characterized in that** the sealing seat (26) is provided with lugs suitable for engaging in recesses provided in the bore (21).

5. A valve according to claim 1, **characterized in that** the seat (26) bears against a sealing gasket (36) mounted inside an annular groove (37) provided in the shoulder (24).

6. A valve according to claim 1, **characterized in that** the valve member (2) having a spherical bearing surface is a vane valve member.

7. A valve according to claim 6, **characterized in that** the vane valve member (2) is made of a polycarbonate material.

8. A valve according to claim 1, **characterized in that** one of the coupling segments (6) is equipped with connection means (7) for connection to a tank while the other coupling segment (5) is equipped with connection means (8, 12) for connection to a pipe and to a stopper.

9. A valve according to claim 1, **characterized in that** the integrally formed body (3) is made of a molded plastics material.

## Patentansprüche

1. Hahn mit einem einstückigen Körper (3), der einen ersten Rohrstutzen (5) und einen zweiten Rohrstutzen (6) aufweist, die Bohrungen (20, 21) - wobei eine Bohrung (21) einen größeren Querschnitt als die andere Bohrung (20) aufweist - begrenzen, die untereinander verbunden sind, um eine Anlageschulter (24) für einen angefügten Sitz (26) zu begrenzen, an dem ein Absperrorgan mit kugelförmiger Auflagefläche (2) zu wirken in der Lage ist, das über einen Bedienungshebel (49) drehbetätigt wird, um die Bohrungen dicht zu verschließen oder wenigstens teilweise zu öffnen, wobei der Sitz (26) passende Abmessungen aufweist, um über den zweiten Rohrstutzen (6) bis zu der Schulter (24) eingeführt zu werden, um hier durch Haltemittel (27) gehalten zu werden, **dadurch gekennzeichnet, daß** der Sitz (26) mit Hilfe von Mitteln vom Typ Rastmittel (29) an der Schulter (24) in Anlage gehalten wird und daß der Sitz (26) aus einem verformbaren Material ausgebildet ist, das dessen Montage in der Bohrung (21) durch Verrasten sicherstellt.

2. Hahn nach Anspruch 1, **dadurch gekennzeichnet, daß** die Haltemittel von der Art Rastmittel (29) durch Stifte gebildet sind, die - in der Bohrung (21) des Rohrstutzens (6) angeordnet - winkelmäßig verteilt sind, um mit der Schulter (24) eine Nut (33) zur Aufnahme des Sitzes (26) zu begrenzen.

3. Hahn nach Anspruch 2, **dadurch gekennzeichnet, daß** der Dichtungssitz einen umlaufenden ringförmigen Kragen (30) begrenzt, der geeignet ist, durch Verformung über die Stifte (29) hinaus gelangen zu können, um in die Nut (33) einzugreifen.

4. Hahn nach Anspruch 1, **dadurch gekennzeichnet, daß** der Dichtungssitz (26) mit Stiften versehen ist, die geeignet sind, in in der Bohrung (21) ausgebildete Aufnahmen einzugreifen.

5. Hahn nach Anspruch 1, **dadurch gekennzeichnet, daß** der Sitz (26) an einer Dichtung (36), die innerhalb einer in der Schulter (24) ausgebildeten Ringnut (37) angebracht ist, in Anlage ist.

6. Hahn nach Anspruch 1, **dadurch gekennzeichnet, daß** das Absperrorgan mit kugelförmiger Auflagefläche (2) ein Flügelverschluß ist.

7. Hahn nach Anspruch 6, **dadurch gekennzeichnet, daß** der Flügelverschluß (2) aus einem Polykarbonatmaterial gefertigt ist.

8. Hahn nach Anspruch 1, **dadurch gekennzeichnet, daß** einer der Rohrstutzen (6) mit Mitteln zum Anschließen (7) an einen Behälter ausgestattet ist, während der andere Rohrstutzen (5) mit Mitteln zum Anschließen (8, 12) an eine Rohrleitung und an einen Verschlußstopfen ausgestattet ist.

9. Hahn nach Anspruch 1, **dadurch gekennzeichnet, daß** der einstückige Körper (3) durch Formen aus einem Kunststoff hergestellt ist.
